# EUROPÄISCHE PATENTSCHRIFT

(11) **EP 1 892 429 B1**
(45) Veröffentlichungstag und Bekanntmachung des Hinweises auf die Patenterteilung: **14.03.2012**
(21) Anmeldenummer: 07014682.4
(22) Anmeldetag: 26.07.2007
(51) Int. Cl.: F16C 33/20

(54) **Laufschicht für ein Lagerelement**
Running layer for a bearing element
Couche de roulement pour un élément de support

(30) Priorität: 02.08.2006 AT 13002006
(43) Veröffentlichungstag der Anmeldung: 27.02.2008
(73) Patentinhaber: Miba Gleitlager GmbH, 4663 Laakirchen (AT)
(72) Erfinder: Leonardelli, Georg, Dipl.-Ing. Dr., 4810 Gmunden (AT)
(74) Vertreter: Burger, Hannes

(56) Entgegenhaltungen:
- EP-A- 0 294 931
- EP-A- 0 340 838
- EP-A- 1 236 914
- GB-A- 1 223 910
- GB-A- 1 338 234
- GB-A- 2 196 876
- US-A- 3 808 130
- US-A- 4 129 550
- US-A- 5 932 049
- US-B1- 6 726 994

## Beschreibung

Die Erfindung betrifft eine Laufschicht für ein Lageelement, insbesondere ein Gleitlager, aus einer synthetischen Polymerschicht, insbesondere einer Harz- bzw. Lackschicht, sowie ein Lagerelement, insbesondere Gleitlager, mit einer Stützmetallschicht, eine darüber angeordneten Lagermetallschicht sowie einer über dieser angeordneten Laufschicht.

Beschichtungen tribologisch beanspruchter Bauteile bzw. Flächen sollen verschiedensten Anforderungen genügen. Zum einen wird eine möglichst reibungsarme Beschichtung gewünscht, welche relativ weich ist und sich dem zufolge gut an durch verschleißbedingten Abrieb sowie den Gleitpartner anpassen kann. Andererseits muss eine genügend hohe mechanische Stabilität und Festigkeit gegeben sein, um neben den statischen auch dynamische Schwingungsbelastungen aufnehmen zu können und somit die Dauerfestigkeit und die Lebensdauer zu steigern. Die Entwicklungen, beispielsweise in der Motorenindustrie, gehen in Richtung höherer spezifischer Leistungen, um insbesondere in Hinblick auf immer strenger werdende Abgasnormen den Wirkungsgrad und damit die Wirtschaftlichkeit und die Umweltverträglichkeit von Verbrennungskraftmaschinen zu erhöhen. Von dieser Entwicklung sind eine Vielzahl von Komponenten eines Verbrennungsmotors betroffen, wie beispielsweise die durch die sehr hohen Drehmomente und die zur Optimierung des Verbrennungsprozesses stetig steigenden Zünddrücke, beispielsweise eines direkt einspritzenden Turbodieselmotors, sehr hoch belasteten Radialgleitlager. Durch die leistungsfähigen Einspritzsysteme dieser Motoren werden ebenso die Komponenten der Einspritzpumpen und deren Messinstrumente bzw. durch die höheren Leistungen auch andere Bauteile, wie Stößel, Stifte oder Rollen, welche gleitbeansprucht werden, diesen hohen Belastungen ausgesetzt. Häufig werden Aluminiumlegierungen für diese Komponenten eingesetzt, da damit grundsätzlich ein gutes Verhältnis zwischen erzielbaren Eigenschaften und aufzuwendenden Kosten erreicht werden kann.

Jüngste Entwicklungen auf diesem Gebiet zeigen - obwohl deren prinzipieller Einsatz in diesem Bereich bereits seit einigen Jahren bekannt ist - vermehrt den Einsatz von so genannten Gleitlacken.

So beschreibt z.B. die DE 22 06 400 A einen Verbundwerkstoff mit metallischem Stützkörper und einer mittels Klebstoff mit dem Stützkörper verbundenen Reib- bzw. Gleitschicht aus thermisch hoch belastbaren Kunststoffen, die wärmehärtbare Polyimidharze und die Laufeigenschaften des Lagers verbessernde Zusätze, wie Polytetafluorethylen, metallische Lagerlegierungen oder dgl. enthält. Die Gleitschicht kann dabei zwischen 70 und 20 Gew.-% wärmehärtbare Polyimidharze und etwa 30 bis 80 Gew.-% selbstschmierende Zusätze enthalten. Als selbstschmierende Zusätze werden Graphit, Molybdändisulfid sowie Oxide genannt.

Aus der EP 0 939 106 A ist ein Gleitschichtmaterial bekannt, das als Matrixmaterial PTFE oder PTFE in Kombination mit anderen Fluorthermoplasten, deren Schmelzpunkt über 260° C liegt, enthält, wobei mindestens ein pulverförmiges Polyaramid enthalten ist, dessen Anteil bezogen auf die Gesamtmenge aus PTFE oder der Mischung aus PTFE und anderen Fluorthermoplasten und dem Polyaramid 10 bis 50 Vol.-% beträgt.

Auch in der EP 1 236 914 A ist ein Gleitlager beschrieben, welche eine Harzbeschichtung auf einer Lagermetallschicht aufweist, wobei die Harzbeschichtung ein wärmehärtbares Harz mit bestimmten physikalischen Eigenschaften in einer Menge von 70 bis 30 Vol.-% versetzt mit selbstschmierenden Zusätzen in einem Ausmaß von 30 bis 70 Vol.-% aufweist und wobei die Härte nach Vickers nicht größer als 20 ist. Das Harz kann beispielsweise ein Polyamidimidharz sein. Als selbstschmierende Zusätze werden Molybdändisulfid, Graphit, Bornitrid, Wolframdisulfid, Polytetrafluorethylen, Blei etc. genannt.

Polymere zur Verwendung als Beschichtungsmaterial von Gleitelementen werden auch in folgenden Dokumenten beschrieben:

US 5,525,246 A, JP 60-1424 A, EP 0 984 182 A, JP 04-83914 A, JP 07-247493 A, GB 2 337 306 A, JP 09-79262 A, JP 2001/173644 A, DE 20 00 632 A, DE 33 43 309 A, DE 32 21 785 A, WO 97/38046 A, EP 0 340 839 A, EP 0 044 577 A, EP 0 340 838 A, DE 24 15 327 A, EP 060 725 A, DE 198 14 756 A, US 4,618,270 A, DE 25 04 833 A, FR 21 33 320 A, GB 2 384 033 B, JP 53-007780 A.

Die US-A-5932049 beschreibt eine Laufschicht gemäß jeweiligem Oberbegriff der Ansprüche 1 bis 5.

Es ist die Aufgabe der vorliegenden Erfindung eine Laufschicht aus einer synthetischen Polymerschicht für ein Lagerelement derart weiterzubilden, dass sie erhöhten Belastungen standhält.

Diese Aufgabe wird durch die jeweiligen kennzeichnenden Merkmale der Ansprüche 1 bis 5 gelöst. Dadurch, dass die synthetische Polymerschicht der Laufschicht aus mehreren Teilschichten, zumindest zwei, besteht, wobei diese Teilschichten eine unterschiedliche Zusammensetzung aufweisen, wird der Vorteil erreicht, dass die Anforderungen an derartige Laufschichten nunmehr nicht nur eine einzelne Teilschicht erfüllen muss, sondern diese Anforderungen auf zumindest zwei Teilschichten aufgeteilt werden können, sodass also die jeweilige Teilschicht so ausgebildet werden kann, dass sie das Anforderungsprofil besser erfüllen kann. Es ist damit möglich, die gesamte Laufschicht derart auszubilden, dass bei Abnutzung einer der Teilschichten, die jeweils darunter liegende Teilschicht, die im Gesamtaufbau der Laufschicht jedoch vom Erfindungsgedanken her ein anderes Anforderungsprofil aufweist, deren Aufgabe zumindest teilweise übernehmen kann. Es wird somit möglich, dass Lagerelemente, die mit synthetischen Laufschichten ausgerüstet sind, höhere Standzeiten aufweisen.

Die erste Teilschicht der Laufschicht kann härter sein als die zweite Teilschicht, wodurch letzterer eine Anpassungsfähigkeit für zu lagernde Bauelemente, beispielsweise Wellen, bzw. eine Einbettfähigkeit für Partikel aus dem Abrieb verliehen werden kann, wohingegen die erste Teilschicht verschleißbeständiger ist und eine höhere Widerstandskraft gegen Abrieb aufweisen kann. Durch die höhere Härte der ersten Teilschicht wird auch eine höhere Kavitationsbeständigkeit erreicht. Gleitzeitig wird durch die weichere zweite Teilschicht die lokale Anpassbarkeit der Laufschicht an sich ermöglicht.

Im Hinblick auf die Beständigkeit gegen hohe mechanische Beanspruchungen ist es dabei von Vorteil, wenn die erste Teilschicht einer Härte nach Vickers aufweist, die ausgewählt ist aus einem Bereich mit einer unteren Grenze von HV2 35 und einer oberen Grenze von HV2 60.

Zum Unterschied dazu kann zur Verbesserung der Einbettfähigkeit die zweite Teilschicht eine Härte nach Vickers aufweisen, die ausgewählt ist aus einem Bereich mit einer unteren Grenze von HV2 25 und einer Grenze von HV2 45.

Zur Steigerung der Härte der ersten Teilschicht kann in dieser zumindest ein Hartstoff enthalten sein, wodurch wiederum die Widerstandskraft gegen Abrieb bzw. die Beständigkeit der ersten Teilschicht erhöht werden kann.

Durch die Trennung der Aufgaben der Laufschicht auf mehrere Teilschichten ist es möglich, dass in der ersten Teilschicht der Hartstoff in einer Menge enthalten ist, die ausgewählt ist aus einem Bereich mit einer unteren Grenze von 5 Gew.-%, insbesondere 10 Gew.-%, beispielsweise 15 Gew.-%, und einer oberen Grenze von 50 Gew.-%, insbesondere 45 Gew.-%, beispielsweise 40 Gew.-%, dass also im Vergleich zu bekannten Laufschichten aus synthetischen Polymerschichten ein höherer Anteil an Hartstoff enthalten ist.

Es kann aber auch in der zweiten Teilschicht ein Hartstoff enthalten sein, um dieser ebenfalls eine gewisse Widerstandskraft zu verleihen, wobei in diesem Fall der Anteil ausgewählt ist aus einem Bereich mit einer unteren Grenze von 2 Gew.-%, insbesondere 5 Gew.-%, beispielsweise 10 Gew.-%, und einer oberen Grenze von 50 Gew.-%, insbesondere 40 Gew.-%, beispielsweise 30 Gew.-%.

Dieser Hartstoff kann ausgewählt sein aus einer Gruppe umfassend Hartstoffe, wie z.B. CrO₃, Fe₃O₄, PbO, ZnO, CdO, Al₂O₃, SiC, Si₃N₄, SiO₂, MnO, Si₃N₄, Ton, Talk, TiO₂, Aluminiumsilikate, wie z.B. Mullit, Magnesiumsilikate, wie z.B. Amosit, Antophyllit, Chrysotil, spheroidaler Kohlenstoff, Carbide, wie z.B,. CaC₂, Mo₂C, WC, Metallpartikel, wie z.B. Zn, Ag, Ba, Bi, Bronze, Cd, Co, Cu, In, Pb, Sn, Tl, Blei-Zinn-Legierungspartikel, Lagermetallpartikel auf Pb- oder Sn-Basis, AlN, Fe₃P, Metallboride, wie z.B. Fe₂B, Ni₂B, FeB, BaSO₄, Metallsulfide, wie z.B. ZnS, Ag₂S, CuS, FeS, FeS₂, Sb₂S₃, PbS, Bi₂S₃, CdS, WS₂, chlorinierte Hydrogencarbonate, Fluoride, wie z.B. CaF₂, Metallfluoride, wie z.B. PbF₂, Carbofluoride (CFₓ), Metalloxifluoride, Crocidolit, Tremolit, Molybdänthiocarbamate, Silizide, Thiophosphate, wie z.B. Zinkthiophosphat.

Es sind auch Mischungen unterschiedlicher Hartstoffe, beispielsweise von zwei, drei oder vier oder mehreren unterschiedlichen Hartstoffen möglich. So ist es z.B. möglich CrO₃ und/oder Fe₃O₄ und/oder PbO und/oder ZnO und/oder CdO und/oder Al₂O₃ und/oder SiC und/oder Si₃N₄ und/oder SiO₂ und/oder MnO und/oder Si₃N₄ und/oder Ton und/oder Talk und/oder TiO₂ und/oder Aluminiumsilikate, wie z.B. Mullit, und/oder Magnesiumsilikate, wie z.B. Amosit, Antophyllit und/oder Chrysotil und/oder spheroidalen Kohlenstoff und/oder Carbide, wie z.B. CaC₂, Mo₂C und/oder WC und/oder Metallpartikel, wie z.B. Zn, Ag, Ba, Bi, Bronze, Cd, Co, Cu, In, Pb, Sn, Tl, Blei-Zinn-Legierungspartikel, Lagermetallpartikel auf Pb- oder Sn-Basis, und/oder AlN und/oder Fe₃P und/oder Metallboride, wie z.B. Fe₂B, Ni₂B, FeB und/oder BaSO₄ und/oder Metallsulfide, wie z.B. ZnS, Ag₂S, CuS, FeS, FeS₂, Sb₂S₃, PbS, Bi₂S₃, CdS, WS₂ und/oder chlorinierte Hydrogencarbonate und/oder Fluoride, wie z.B. CF₂ und/oder Metallfluoride, wie z.B. PbF₂, und/oder Metalloxifluoride und/oder Crocidolit und/oder Tremolit und/oder Molybdänthiocarbamate und/oder Silizide und/oder Thiophosphate, wie z.B. Zinkthiophosphat, mit CrO₃ und/oder Fe₃O₄ und/oder PbO und/oder ZnO und/oder CdO und/oder Al₂O₃ und/oder SiC und/oder Si₃N₄ und/oder SiO₂ und/oder MnO und/oder Si₃N₄ und/oder Ton und/oder Talk und/oder TiO₂ und/oder Aluminiumsilikaten, wie z.B. Mullit, Magnesiumsilikaten, wie z.B. Amosit, Antophyllit und/oder Chrysotil und/oder spheroidalen Kohlenstoff und/oder Carbiden, wie z.B. CaC₂, Mo₂C und/oder WC und/oder Metallpartikeln, wie z.B. Zn, Ag, Ba, Bi, Bronze, Cd, Co, Cu, In, Pb, Sn, Tl, Blei-Zinn-Legierungspartikel, Lagermetallpartikel auf Pb- oder Sn-Basis, und/oder AIN und/oder Fe₃P und/ oder Metallboriden, wie z.B. Fe₂B, Ni₂B, FeB und/oder BaSO₄ und/oder Metallsulfiden, wie z.B. ZnS, Ag₂S, CuS, FeS, FeS₂, Sb₂S₃, PbS, Bi₂S₃, CdS, WS₂ und/oder chlorinierten Hydrogencarbonaten und/oder Fluoriden, wie z.B. CF₂ und/oder Metallfluoriden, wie z.B. PbF₂, und/oder Metalloxifluoriden und/oder Crocidolit und/oder Tremolit und/oder Molybdänthiocarbamaten und/oder Siliziden und/oder Thiophosphaten, wie z.B. Zinkthiophosphat, zu mischen. Da das zu lagernde Bauelement, beispielsweise die Welle, in direktem Kontakt mit der zweiten Teilschicht steht, ist es von Vorteil, wenn in dieser zweiten Teilschicht ein Festschmierstoff enthalten ist. Darüber hinaus ist es aber auch möglich, dass auch in der ersten, härteren Teilschicht ein Festschmierstoff enthalten ist, sodass also bei lokalem Verschleiß der zweiten weicheren Teilschicht eine gewisse Gleitfähigkeit der Laufschicht nach wie vor erhalten bleibt. Dabei ist es von Vorteil, wenn der Anteil des zumindest einen festen Schmierstoffes ausgewählt ist aus einem Bereich mit einer unteren Grenze von 5 Gew.-%, insbesondere 7 Gew.-%, beispielsweise 9 Gew.-%, und einer oberen Grenze von 20 Gew.-%, insbesondere 15 Gew.-%, beispielsweise 12 Gew.-%da damit die beste Wirkung im Hinblick auf die Kombination Härte und Schmierfähigkeit erreicht werden kann.

Im Gegensatz dazu ist vorzugsweise der Anteil des zumindest einen Festschmierstoffes in der zweiten Teilschicht größer, wodurch also diese zweite Teilschicht nicht nur weicher ist, sondern auch eine erhöhte Schmierfähigkeit aufweist, und ist es dabei von Vorteil, wenn dieser Anteil ausgewählt ist aus einem Bereich mit einer unteren Grenze von 15 Gew.-%, insbesondere 20 Gew.-%, beispielsweise 25 Gew.-%, und einer oberen Grenze von 50 Gew.-%, insbesondere 40 Gew.-%, beispielsweise 30 Gew.-%.

Der Festschmierstoff ist vorzugsweise ausgewählt aus einer Gruppe umfassend MoS₂, h-BN, WS₂, Graphit, Polytetrafluorethylen, Pb, Pb-Sn-Legierungen, CF₂, PbF₂.

Auch in diesem Fall sind Mischungen mehrere Festschmierstoffe möglich, beispielsweise können in der ersten und/oder zweiten Teilschicht Mischungen aus MoS₂ und/oder h-BN und/oder WS₂ und/oder Graphit und/oder Polytetrafluorethylen und/oder Pb und/oder Pb-Sn-Legierungen und/oder CF₂ und/oder PbF2 mit MoS₂ und/oder h-BN und/oder WS₂ und/oder Graphit und/oder Polytetrafluorethylen und/oder Pb und/oder Pb-Sn-Legierungen und/oder CF₂ und/oder PbF₂ enthalten sein.

Die erste Teilschicht besteht aus einem zur zweiten Teilschicht unterschiedlichen Polymer, wodurch die Effekte, wie z.B. Anpassbarkeit, Widerstandsfähigkeit, Härte, etc. verstärkt werden können. Dabei umfasst der Ausdruck "unterschiedliches Polymer" auch gleiche Polymere die sich lediglich durch unterschiedliche Anordnungen der Polymerketten bzw. Reste an den Polymerketten, wie z.B. taktische, ataktische, syndiotaktische, etc., unterscheiden, da diese Polymere auch zueinander unterschiedliche Eigenschaften aufweisen können.

Bevorzugt ist das Polymer der ersten und/oder zweiten Teilschicht ausgewählt aus einer Gruppe umfassend Polytetrafluorethylen, fluorhältige Harze, wie z.B. Perfluoralkoxy-Copolymere, Polyfluoralkoxy-Polytetrafluorethylen-Copolymere, Ethylen-tetrafluorethylen, Polychlortrifluorethylen, fluorierte Ethylen-Propylen Copolymere, Polyvinylfluorid, Polyvinylidenfluorid, alternierende Copolymere, statistische Copolymere, wie z.B. Perfluorethylenpropylen, Polyesterimide, Bismaleimide, Polyimidharze, wie z.B. Carboranimide, aromatische Polyimidharze, wasserstofffreie Polyimidharze, Poly-triazo-Pyromellithimide, Polyamidimide, insbesondere aromatische, Polyaryletherimide, gegebenenfalls modifiziert mit Isocyanaten, Polyetherimide, gegebenenfalls modifiziert mit Isocyanaten, Epoxyharze, Epoxyharzester, Phenolharze, Polyamid 6, Polyamid 66, Polyoxymethylen, Silikone, Polyarylether, Polyarylketone, Polyaryletherketone, Polyarylether-etherketone, Polyetheretherketone, Polyetherketone, Polyvinylidendiflouride, Polyethylensulfide, Allylensulfid, Poly-triazo-Pyromellithimide, Polyesterimide, Polyarylsulfide, Polyvinylensulfide, Polyphenylensulfide, Polysulfone, Polyethersulfone, Polyarylsulfone, Polyaryloxide, Polyarylsulfide, Nitrilgummi, Fluorkautschuke, sowie Copolymere daraus.

Auch hierbei sind wieder Mischungen mehrerer Polymere für die erste und/oder zweite Teilschicht möglich, beispielsweise von Polytetrafluorethylen und/oder fluorhältigen Harzen, wie z.B. Perfluoralkoxy-Copolymere, Polytluoralkoxy-Polytetrafluorethylen-Copolymere und/oder Ethylen-tetrafluorethylen und/oder Polychlortrifluorethylen und/oder fluorierten Ethylen-Propylen Copolymeren und/oder Polyvinylfluorid und/oder Polyvinylidenfluorid und/oder alternierenden Copolymeren und/oder statistischen Copolymeren, wie z.B. Perfluorethylenpropylen, Polyesterimide und/oder Bismaleimide und/oder Polyimidharzen, wie z.B. Carboranimiden und/oder aromatischen Polyimidharzen und/oder wasserstofffreien Polyimidharzen und/oder Poly-triazo-Pyromellithimiden und/oder Polyamidimiden, insbesondere aromatischen Polyaryletherimiden, gegebenenfalls modifiziert mit Isocyanaten, und/oder Polyetherimiden, gegebenenfalls modifiziert mit Isocyanaten, und/oder Epoxyharzen und/oder Epoxyharzestern und/oder Phenolharzen und/oder Polyamid 6 und/oder Polyamid 66 und/oder Polyoxymethylenen und/oder Silikonen und/oder Polyarylethern und/oder Polyarylketonen und/oder Polyaryletherketonen und/oder Polyarylether-etherketonen und/oder Polyetheretherketonen und/oder Polyetherketonen und/oder Polyvinylidendiflouriden und/oder Polyethylensulfiden und/oder Allylensulfiden und/oder Poly-triazo-Pyromellithimiden und/oder Polyesterimiden und/oder Polyarylsulfiden und/oder Polyvinylensulfiden und/oder Polyphenylensulfiden und/oder Polysulfonen und/oder Polyethersulfonen und/oder Polyarylsulfonen und/oder Polyaryloxiden und/oder Polyarylsulfiden und/oder Nitrilgummi und/oder Fluorkautschuken mit Polytetrafluorethylen und/oder fluorhältigen Harzen, wie z.B. Perfluoralkoxy-Copolymere, Polyfluoralkoxy-Polytetrafluorethylen-Copolymere und/oder Ethylen-tetrafluorethylen und/oder Polychlortrifluorethylen und/oder fluorierten Ethylen-Propylen Copolymeren und/oder Polyvinylfluorid und/oder Polyvinylidenfluorid und/oder alternierenden Copolymeren und/oder statistischen Copolymeren, wie z.B. Perfluorethylenpropylen, Polyesterimide und/oder Bismaleimide und/oder Polyimidharzen, wie z.B. Carboranimiden und/oder aromatischen Polyimidharzen und/oder wasserstofffreien Polyimidharzen und/oder Poly-triazo-Pyromellithimiden und/oder Polyamidimiden, insbesondere aromatischen Polyaryletherimiden, gegebenenfalls modifiziert mit Isocyanaten, und/oder Polyetherimiden, gegebenenfalls modifiziert mit Isocyanaten, und/oder Epoxyharzen und/oder Epoxyharzestern und/oder Phenolharzen und/oder Polyamid 6 und/oder Polyamid 66 und/oder Polyoxymethylenen und/oder Silikonen und/oder Polyarylethem und/oder Polyarylketonen und/oder Polyaryletherketonen und/oder Polyarylether-etherketonen und/oder Polyetheretherketonen und/oder Polyetherketonen und/oder Polyvinylidendiflouriden und/oder Polyethylensulfiden und/oder Allylensulfiden und/oder Poly-triazo-Pyromellithimiden und/oder Polyesterimiden und/oder Polyarylsulfiden und/oder Polyvinylensulfiden und/oder Polyphenylensulfiden und/oder Polysulfonen und/oder Polyethersulfonen und/oder Polyarylsulfonen und/oder Polyaryloxiden und/oder Polyarylsulfiden und/oder Nitrilgummi und/oder Fluorkautschuken.

Bei Vorhandensein von zwei oder mehreren Polymeren in zumindest einer der Teilschichten können diese ein Durchdringungsnetzwerk bilden, bei dem jedes Polymer netzwerkartig vorliegt. Dazu können die Polymere gemeinsam, d.h. in Gegenwart des jeweiligen anderen, hergestellt bzw. vernetzt werden. Die Polymere sollten eine ähnliche Reaktionskinetik aufweisen.

Der Anteil des Festschmierstoffes in der ersten Teilschicht kann in Richtung auf die zweite Teilschicht zunehmen, wodurch die erste Teilschicht in Richtung auf die zweite Teilschicht weicher wird, und die geringste Härte im Bereich der Grenzfläche zur zweiten Teilschicht aufweist, sodass also bei lokaler Abnutzung der zweiten Teilschicht eine höhere Gleitfähigkeit der ersten Teilschicht im Vergleich zu oben genannter Ausführungsvariante ermöglicht wird.

Ebenso ist es möglich, dass der Anteil des Hartstoffes in der ersten Teilschicht in Richtung auf die zweite Teilschicht abnimmt, wodurch ebenfalls wiederum im Bereich der Grenzfläche zur zweiten Teilschicht die erste Teilschicht die geringste Härte aufweist und damit in diesen Grenzflächenbereich eine höhere Anpassbarkeit bzw. Einbettfähigkeit aufweist.

Aus dem selben Zweck ist es möglich, dass der Anteil des Hartstoffes in der zweiten Teilschicht in Richtung auf die erste Teilschicht zunimmt, sodass also die zweite Teilschicht in den unteren Schichtbereichen eine höhere Widerstandsfähigkeit aufweist und damit bereits in gewissem Maße einen Teil der Aufgabe der ersten Teilschicht übernehmen kann.

Zur Erhöhung der Gleitfähigkeit im Bereich der Grenzfläche zum zu lagernden Bauteil ist es möglich, dass der Festschmierstoff in der zweiten Teilschicht in Richtung auf die erste Teilschicht abnimmt, also im Bereich einer Welle den höchsten Anteil des Festschmierstoffes aufweist.

Zu diesen Zwecken ist es möglich, dass die erste Teilschicht und/oder zweite Teilschicht aus mehreren Einzelschichten unterschiedlicher Zusammensetzung im obigen Sinne besteht, beispielsweise in der ersten Teilschicht der Anteil des Hartstoffes schrittweise in Richtung auf die zweite Teilschicht abnimmt bzw. die Konzentration des festen Schmierstoffes in diese Richtung zunimmt bzw. dass in der zweiten Teilschicht der Anteil des Hartstoffes schrittweise in Richtung auf die erste Teilschicht zunimmt bzw. der Anteil des Festschmierstoffes in diese Richtung abnimmt.

Obwohl es prinzipiell nicht unbedingt notwendig ist, zwischen den einzelnen Schichten der Laufschicht Haftvermittler anzuordnen, da die Haftfähigkeit der einzelnen Polymerschichten ausreichend ist, besteht zur Erhöhung dieser Haftfestigkeit durchaus die Möglichkeit, zwischen zumindest zwei Einzelschichten der Teilschichten bzw. zwischen den Teilschichten einen Haftvermittler anzuordnen. Es wird damit einem zumindest lokalen Ablösen einer einzelnen Teilschicht von einer anderen vorgebeugt.

Schließlich wird die Aufgabe der Erfindung aber auch durch ein Lagerelement gelöst, bei dem die Laufschicht erfindungsgemäß ausgebildet ist, wobei die erste Teilschicht zwischen der zweiten Teilschicht und der Lagermetallschicht angeordnet ist, also die zweite Teilschicht im Bereich des zu lagernden Bauteils angeordnet ist.

Zum besseren Verständnis der Erfindung wird diese anhand der nachfolgenden Figuren und Beispiele näher erläutert.

Es zeigen dabei jeweils stark schematisch vereinfacht.
- Fig. 1: eine erste Ausführungsvariante eines Lagerelements;
- Fig. 2: eine weitere Ausführungsvariante des Schichtaufbaus eines Lagerelementes.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen.

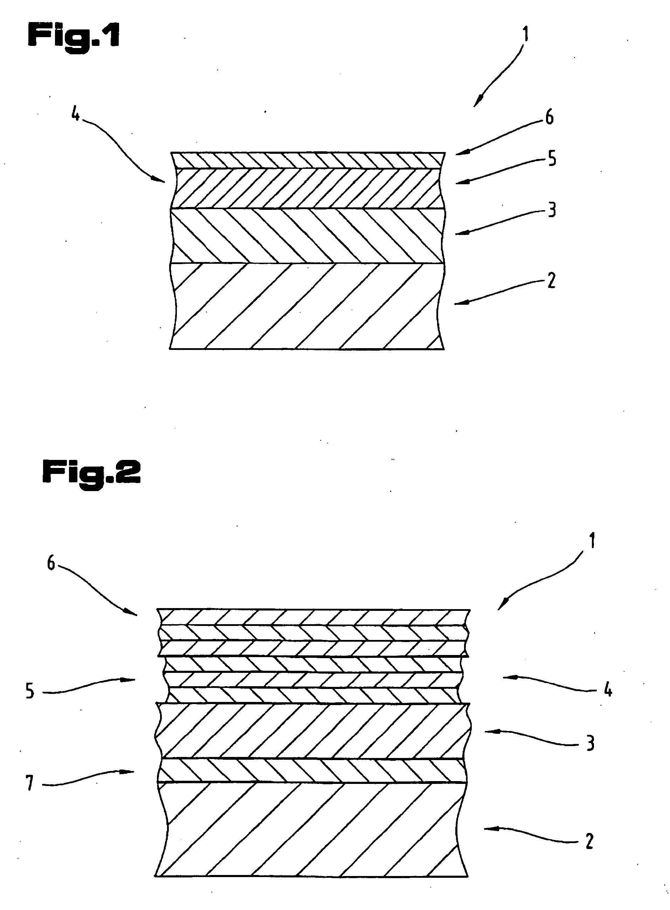

Fig. 1 zeigt ein Lagerelement 1, bestehend aus einer Stützmetallschicht 2, einer darauf angeordneten Lagermetallschicht 3, sowie einer über dieser angeordneten Laufschicht 4, die bei dieser Ausführungsvariante aus einer ersten Teilschicht 5, die auf der Lagermetallschicht 3 ausgebildet ist, sowie einer über der ersten Teilschicht 5 angeordneten zweiten Teilschicht 6, die z.B. mit einer nicht dargestellten Welle in Kontakt steht.

Die Stützmetallschicht 2 besteht üblicherweise aus Stahl, kann aber selbstverständlich auch als dazu vergleichbaren Werkstoffen, die dem Lagerelement 1 eine entsprechende Strukturfestigkeit verleihen, gebildet sein.

Als Lagermetallschicht 3 kommen prinzipiell sämtliche für derartige Lagerelemente aus dem Stand der Technik bekannte Lagermetalle in Frage. Beispiele hierfür sind:
1. Lagermetalle auf Aluminiumbasis (zum Teil nach DIN ISO 4381 bzw. 4383): AlSn6CuNi, AlSn20Cu, AlSi4Cd, AlCd3CuNi,AlSil1Cu, AlSn6Cu, AlSn40, AlSn25CuMn,AlSi11CuMgNi;
2. Lagermetalle auf Kupferbasis (zum Teil nach DIN ISO 4383): CuSn10,CuA110Fe5Ni5, CuZn31Si1, CuPb24Sn2, CuSn8Bi10;
3. Lagermetalle auf Zinnbasis: SnSb8Cu4, SnSb12Cu6Pb.

Die erste Teilschicht 5 sowie die zweite Teilschicht 6 sind entsprechend obigen Ausführungen ausgebildet.

Das Lagerelement 1 kann die Form eines Gleitlagers, beispielsweise einer Gleitlagerhalbschale, aufweisen, ebenso sind Ausführungen in Vollbauweise bzw. Direktbeschichtungen von z.B. Pleueln, insbesondere Pleuelaugen, möglich, wobei in diesem Fall der Direktbeschichtung unter Umständen auf die Lagermetallschicht 3 verzichtet werden kann. Es sind aber auch andere Anwendungsmöglichkeiten von der Erfindung mitumfasst, beispielsweise die Ausbildung von Anlaufscheiben oder dgl. Prinzipiell ist die Erfindung auf sämtliche Lagerelemente 1 anwendbar, bei welche tribologische Eigenschaften erforderlich sind.

In Fig. 2 ist ein anderer Mehrschichtaufbau des Lagerelementes 1 gezeigt. Dieser besteht wiederum aus der außen liegenden Stützmetallschicht 2, der Lagermetallschicht 3 sowie der Laufschicht 4.

Bei dieser Ausführungsvariante ist zwischen der Stützmetallschicht 2 und der Lagermetallschicht 3 eine Zwischenschicht 7 angeordnet, die beispielsweise als Bindeschicht ausgebildet sein kann. Derartige Bindeschichten sind bereits aus dem Stand der Technik für Gleitlager bekannt, beispielsweise bestehen diese aus Reinaluminium, Aluminiumlegierungen, insbesondere einer Aluminiumlegierung mit Scandium, etc. Die Zwischenschicht 7 kann aber auch als Diffusionssperrschicht ausgebildet sein, beispielsweise als Nickel-, Kupfer- oder Silberdamm oder dgl.

Selbstverständlich ist es möglich, mehrere dieser Zwischenschichten 7 anzuordnen, beispielsweise sowohl Binde- als auch Diffusionssperrschichten.

Bei dieser Ausführungsvariante besteht die Laufschicht 4 wiederum aus der ersten Teilschicht 5 sowie der zweiten Teilschicht 6, wobei sowohl die erste Teilschicht 5 als auch die zweite Teilschicht 6 aus mehreren Einzelschichten bestehen, wie dies bereits oben dargelegt wurde, sodass im Einzelnen hierauf zur Vermeidung unnötiger Wiederholungen nicht mehr eingegangen werden.

Bei sämtlichen Ausführungsvarianten der Erfindung können selbstverständlich zwischen der Laufschicht 4 und der Lagermetallschicht 3 ebenfalls nicht dargestellte Zwischenschichten angeordnet sein, beispielsweise wiederum Bindeschichten und/oder Diffusionssperrschichten.

Auch zwischen den Schichten der ersten Teilschicht 5 und/oder zweiten Teilschicht 6 kann zumindest bereichsweise eine Haftvermittlerschicht ausgebildet sein, wie dies bereits oben dargelegt wurde.

Als Haftvermittelschichten können z.B. Primer verwendet werden.

Die erste Teilschicht 5 kann eine Schichtdicke aufweisen, ausgewählt aus einem Bereich mit einer unteren Grenze von 3 µm und einer oberen Grenze von 20 µm.

Ebenso kann die zweite Teilschicht 6 eine Schichtdicke aufweisen, ausgewählt aus einem Bereich mit einer unteren Grenze von 3 µm und einer oberen Grenze von 20 µm.

Die Einzelschichten der ersten Teilschicht 5 bzw. der zweiten Teilschicht 6 können eine Schichtdicke aufweisen, ausgewählt aus einem Bereich mit einer unteren Grenze von 3 µm und einer oberen Grenze von 10 µm.

Wie bereits oben ausgeführt ist es möglich, innerhalb dieser Einzelschichten der ersten Teilschicht 5 bzw. der zweiten Teilschicht 6 die Konzentration des Festschmierstoffes bzw. der Hartpartikel bzw. der Fasen schrittweise zu verändern. Anstelle der schrittweisen Veränderung ist es aber auch möglich, dass diese Veränderung der Konzentrationen kontinuierlich von statten geht, sodass also innerhalb der ersten Teilschicht 5 und/oder der zweiten Teilschicht 6 keine diskreten Einzelschichten mehr unterscheidbar sind.

Es sei weiters erwähnt, dass es nicht zwingend erforderlich ist, dass sich die Konzentrationen sowohl in der ersten Teilschicht 5 als auch in der zweiten Teilschicht 6 ändern, sondern dass es Ausführungsvarianten gibt, bei denen entweder in der ersten Teilschicht 5 oder in der zweiten Teilschicht 6 eine derartige Konzentrationsänderung ausgebildet wird.

Ebenso ist es möglich, dass sich nur die Konzentration des Festschmierstoffes oder nur die Konzentration der Hartpartikel oder nur die Konzentration der Fasern innerhalb einer der Teilschichten 5, 6 ändert.

Die Konzentrationsänderungen können beispielsweise in 5 %- oder 10 %-Schritten ausgebildet sein.

Weiters ist es möglich, dass bei Ausführungsvarianten bei denen innerhalb der ersten Teilschicht 5 und/oder der zweiten Teilschicht 6 mehrere Festschmierstoffe oder Hartpartikel und/oder Fasern angeordnet sind, dass sich die Konzentrationsänderung nur auf einen einzelnen bzw. nicht die gesamte Anzahl an unterschiedlichen Festschmierstoffen und/oder Hartpartikeln und/oder Fasern bezieht.

Im Folgenden sind einige Beispiele für erfindungsgemäße Laufschichten 4 des Lagerelementes dargestellt.

### Beispiel:

Hierbei besteht die erste Teilschicht 5 aus einem Polyamid, welches Bornitrid bzw. Siliziumcarbid als Hartpartikel enthält, in einem Anteil von 24 Gew.-% bis 28 Gew.-%. Zur weiteren Verstärkung und zur Steigerung der thermischen Leitfähigkeit sind Metallfasern in einem Anteil enthalten, ausgewählt aus einem Bereich von 10 Gew.-%. Zusätzlich enthält diese erste Teilschicht 5 Festschmierstoffe in einem Ausmaß bis 10 Gew.-%, wobei diese aus MoS₂ oder Graphit bestehen.

Die zweite Teilschicht 6 besteht aus einem Polyamidimid mit einem höheren Anteil an Festschmierstoffen, insbesondere MoS₂ und/oder Graphit, wobei dieser höhere Anteil bis zu 20 Gew.-% beträgt. In dieser Schicht sind keine Metallfasern enthalten.

Weitere Bespiele sind in Tabelle 1 im Anhang angegeben. Dabei steht "1" für die erste Teilschicht 5 und "2" für die zweite Teilschicht 6, wobei für jedes Beispiel jeweils eine erste und eine zweite Teilschicht 5, 6 angeführt sind. Sämtliche Angaben zur Zusammensetzung sind in Gew.-% zu verstehen.

Es sei erwähnt, dass die angeführten Beispiele für den Schutzumfang nicht beschränkenden wirken, sondern sich die Erfindung auf sämtliche mögliche Kombinationen, welche im Rahmen der Patentansprüche möglich sind, erstreckt.

Sämtliche Angaben zu Wertebereichen in gegenständlicher Beschreibung sind so zu verstehen, dass diese beliebige und alle Teilbereiche daraus mit umfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereich beginnen mit einer unteren Grenze von 1 oder größer und enden bei einer oberen Grenze von 10 oder weniger, z.B. 1 bis 1,7, oder 3,2 bis 8,1 oder 5,5 bis 10.

Der Ordnung halber sei abschließend darauf hingewiesen, dass zum besseren Verständnis des Aufbaus des Lagerelementes 1 dieses bzw. dessen Bestandteile teilweise unmaßstäblich und/oder vergrößert und/oder verkleinert dargestellt wurden.

Die den eigenständigen erfinderischen Lösungen zugrunde liegende Aufgabe kann der Beschreibung entnommen werden.

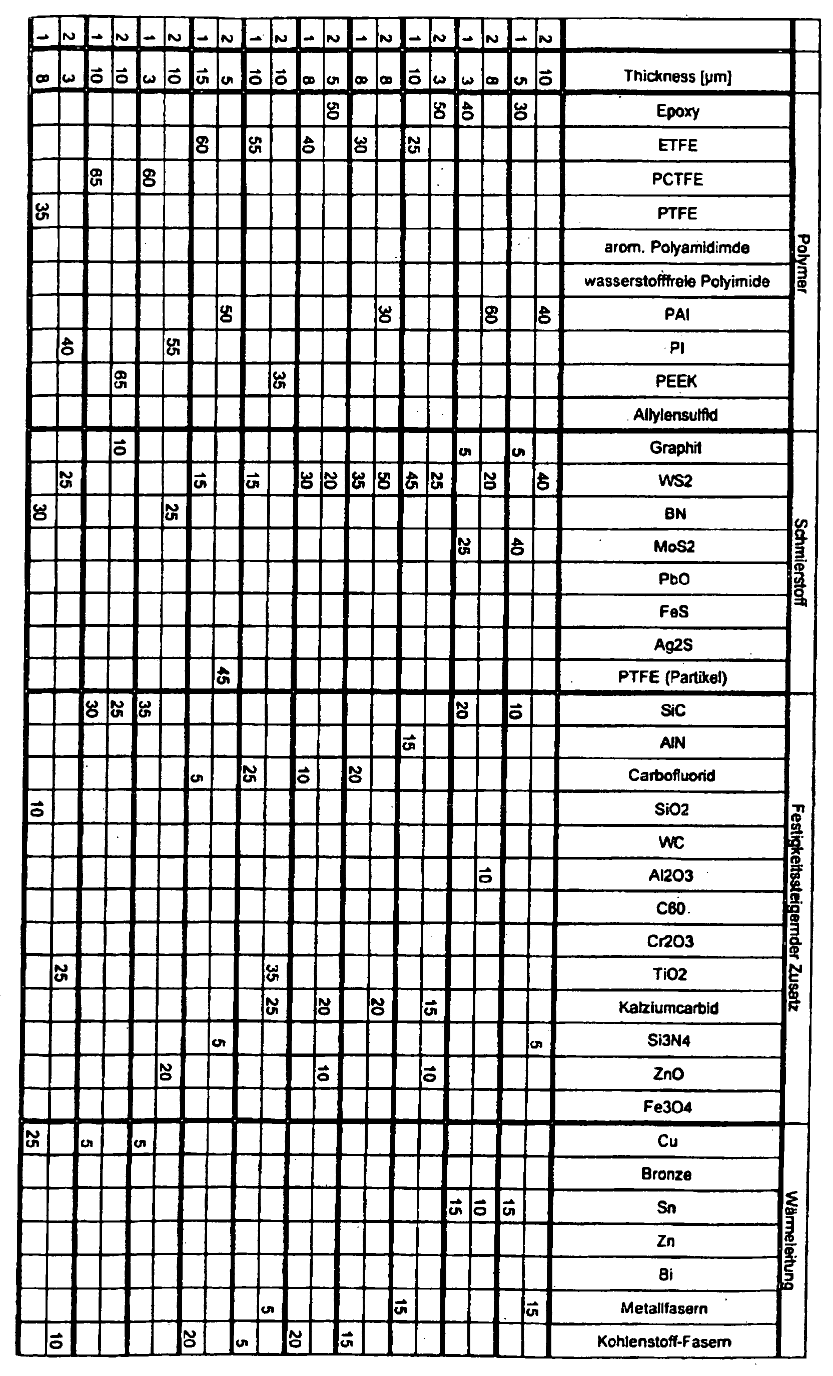

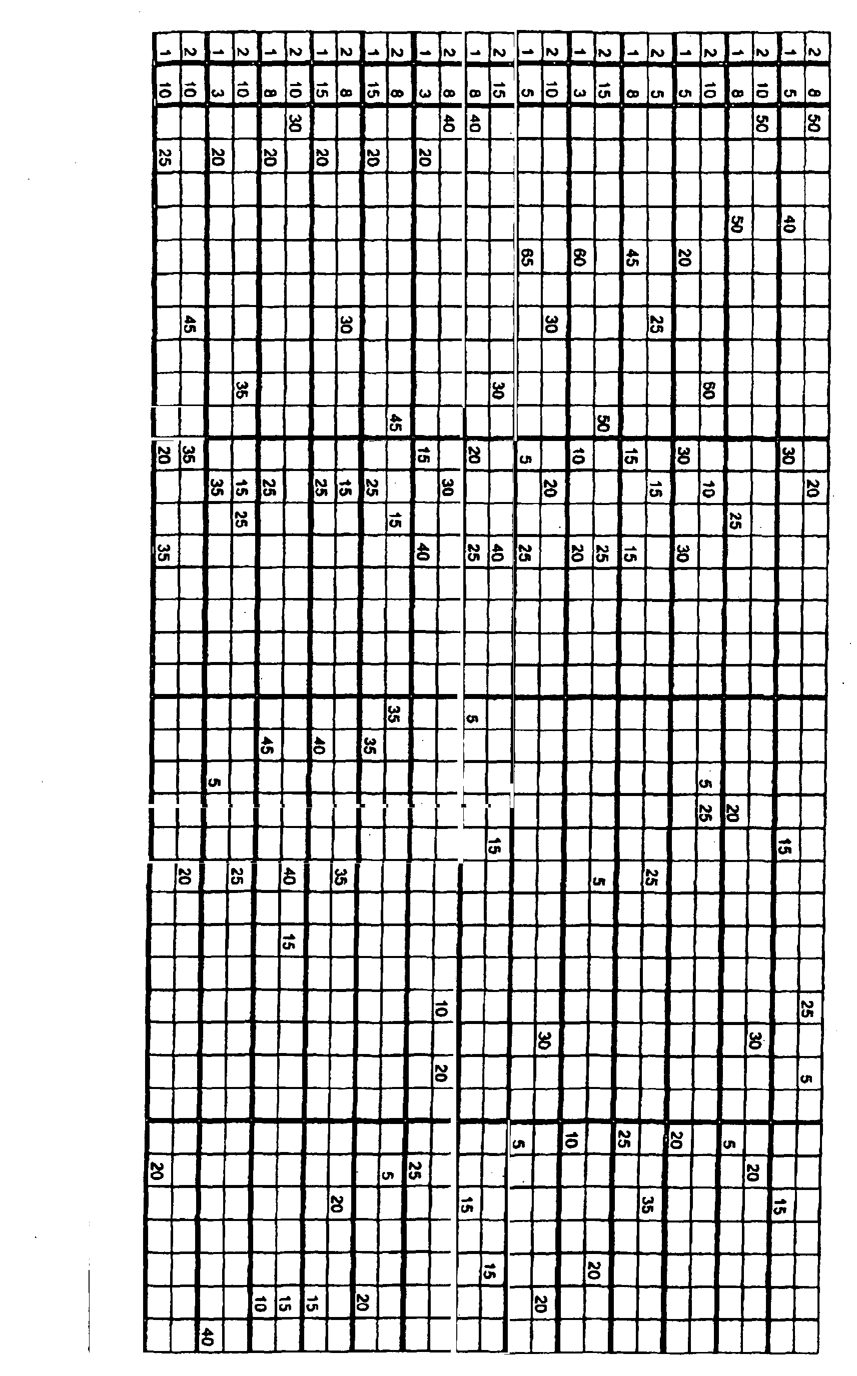

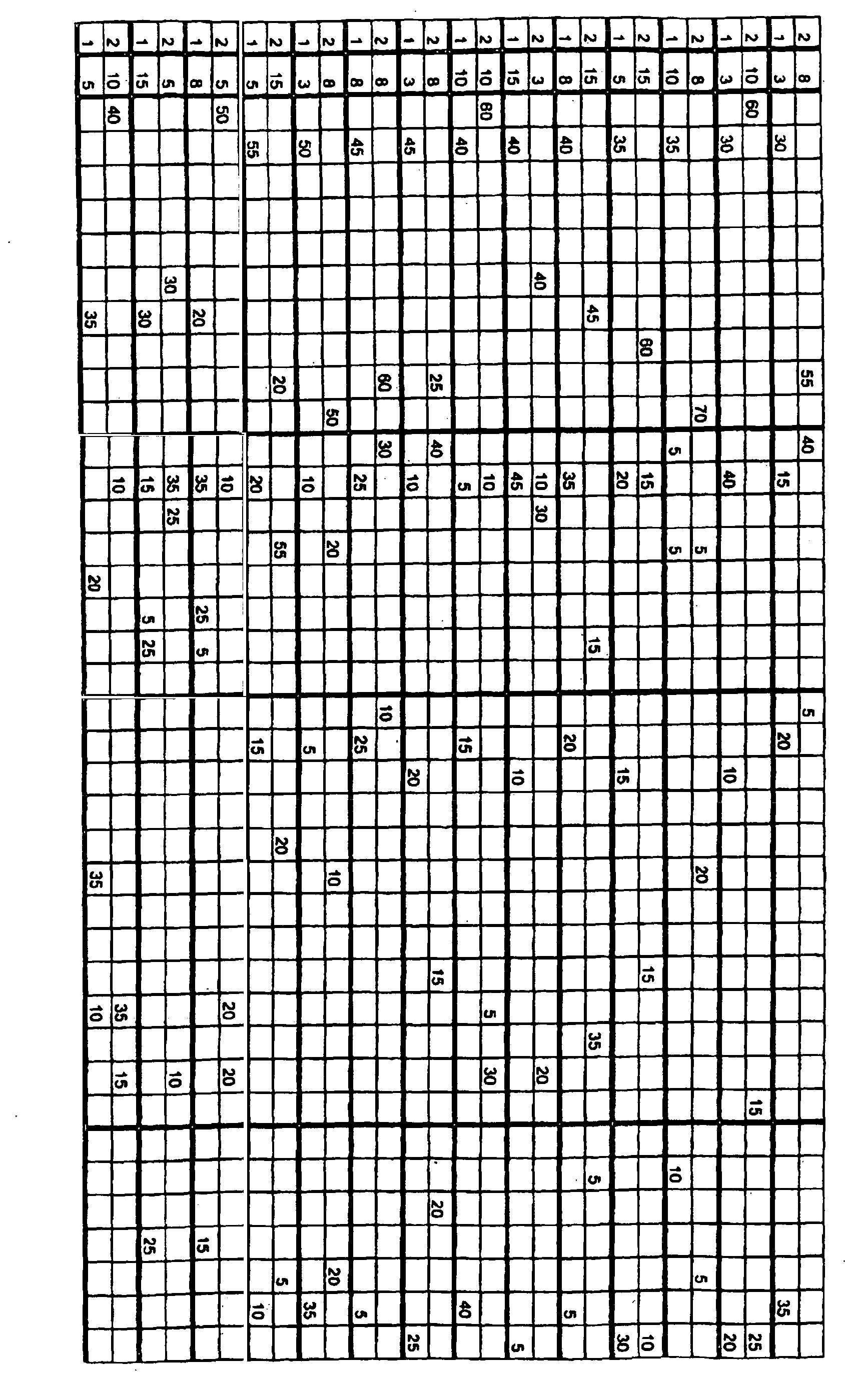

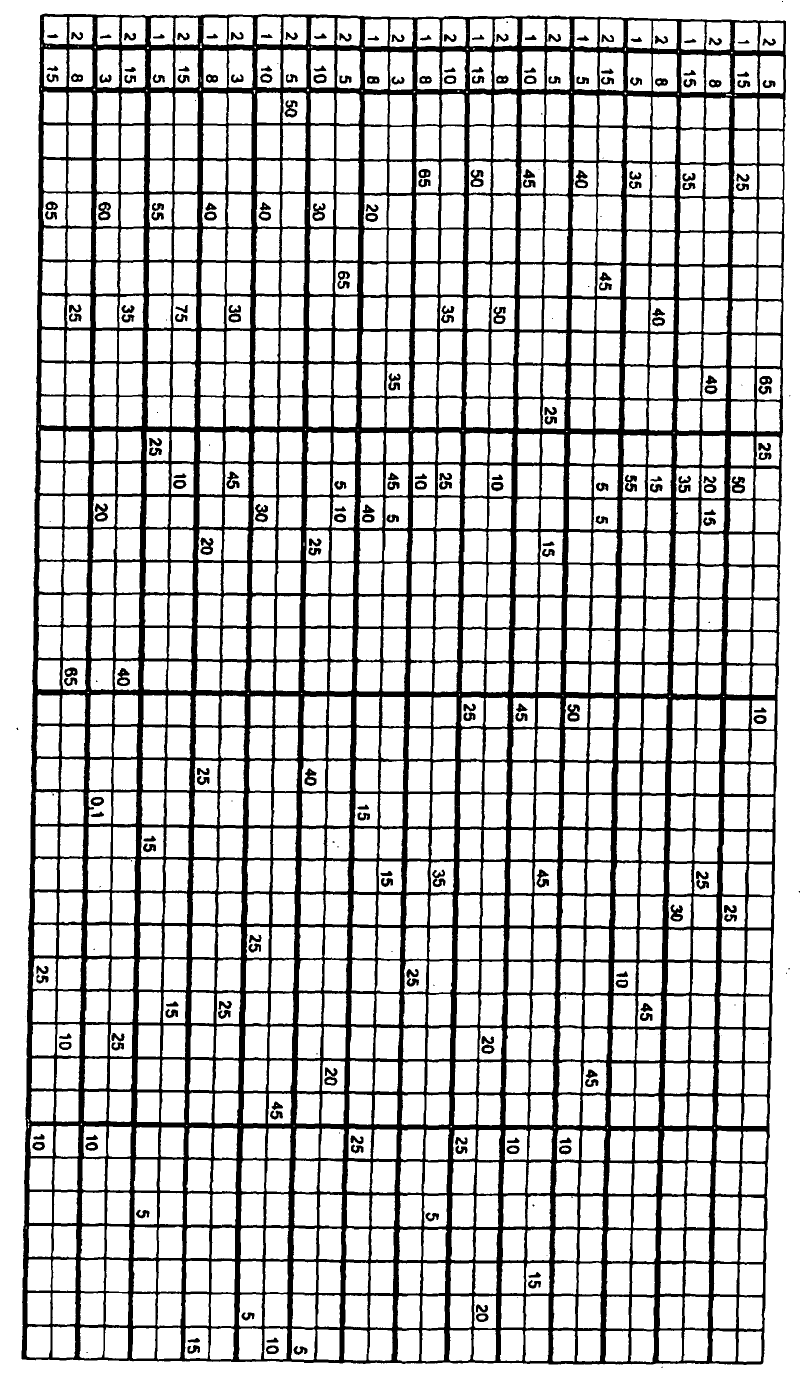

### Bezugszeichenaufstellung

- 1: Lagerelement
- 2: Stützmetallschicht
- 3: Lagermetallschicht
- 4: Laufschicht
- 5: Teilschicht

- 6: Teilschicht
- 7: Zwischenschicht

## Patentansprüche

1. Laufschicht (4) für ein Lagerelement (1), insbesondere ein Gleitlager, aus einer synthetischen Polymerschicht, insbesondere einer Harz- bzw. Lackschicht, wobei die Polymerschicht aus einer ersten Teilschicht (5) und aus einer zweiten Teilschicht (6) besteht, und die erste Teilschicht (5) aus einem ersten Polymer und die zweite Teilschicht (6), die zur Anlage an ein zu lagerndes Bauelement dient, aus einem zweiten, vom ersten verschiedenen Polymer besteht, und wobei in der zweiten Teilschicht (6) zumindest ein Festschmierstoff in einem Anteil enthalten ist, der ausgewählt ist aus einem Bereich mit einer unteren Grenze von 15 Gew.-% und einer oberen Grenze von 50 Gew.-%, **dadurch gekennzeichnet, dass** in der ersten Teilschicht (5) ebenfalls zumindest ein Festschmierstoff in einem Anteil enthalten ist, der ausgewählt ist aus einem Bereich mit einer unteren Grenze von 5 Gew.-% und einer oberen Grenze von 20 Gew.-%, mit der Maßgabe, dass der Anteil des zumindest einen Festschmierstoffes in der zweiten Teilschicht (6) größer ist als in der ersten Teilschicht (5).

2. Laufschicht (4) für ein Lagerelement (1), insbesondere ein Gleitlager, aus einer synthetischen Polymerschicht, insbesondere einer Harz- bzw. Lackschicht, wobei die Polymerschicht aus einer ersten Teilschicht (5) und aus einer zweiten Teilschicht (6) besteht, und die erste Teilschicht (5) aus einem ersten Polymer und die zweite Teilschicht (6), die zur Anlage an ein zu lagerndes Bauelement dient, aus einem zweiten, vom ersten verschiedenen Polymer besteht, **dadurch gekennzeichnet, dass** in der ersten Teilschicht (5) zumindest ein Hartstoff enthalten ist, wobei der Anteil des Hartstoffes in der ersten Teilschicht (5) in Richtung auf die zweite Teilschicht (6) abnimmt.

3. Laufschicht (4) für ein Lagerelement (1), insbesondere ein Gleitlager, aus einer synthetischen Polymerschicht, insbesondere einer Harz- bzw. Lackschicht, wobei die Polymerschicht aus einer ersten Teilschicht (5) und aus einer zweiten Teilschicht (6) besteht, und die erste Teilschicht (5) aus einem ersten Polymer und die zweite Teilschicht (6), die zur Anlage an ein zu lagerndes Bauelement dient, aus einem zweiten, vom ersten verschiedenen Polymer besteht, **dadurch gekennzeichnet, dass** in der ersten Teilschicht (5) zumindest ein Festschmierstoff enthalten ist, wobei der Anteil des Festschmierstoffes in der ersten Teilschicht (5) in Richtung auf die zweite Teilschicht (6) zunimmt.

4. Laufschicht (4) für ein Lagerelement (1), insbesondere ein Gleitlager, aus einer synthetischen Polymerschicht, insbesondere einer Harz- bzw. Lackschicht, wobei die Polymerschicht aus einer ersten Teilschicht (5) und aus einer zweiten Teilschicht (6) besteht, und die erste Teilschicht (5) aus einem ersten Polymer und die zweite Teilschicht (6), die zur Anlage an ein zu lagerndes Bauelement dient, aus einem zweiten, vom ersten verschiedenen Polymer besteht, **dadurch gekennzeichnet, dass** in der zweiten Teilschicht (6) ein Hartstoff mit einem Anteil enthalten ist, der ausgewählt ist aus einem Bereich mit einer unteren Grenze von 2 Gew.-% und einer oberen Grenze von 50 Gew.-% und der Anteil des Hartstoffes in der zweiten Teilschicht (6) in Richtung auf die erste Teilschicht (5) zunimmt.

5. Laufschicht (4) für ein Lagerelemente (1), insbesondere ein Gleitlager, aus einer synthetischen Polymerschicht, insbesondere einer Harz- bzw. Lackschicht, wobei die Polymerschicht aus einer ersten Teilschicht (5) und aus einer zweiten Teilschicht (6) besteht, und die erste Teilschicht (5) aus einem ersten Polymer und die zweite Teilschicht (6), die zur Anlage an ein zu lagerndes Bauelement dient, aus einem zweiten, vom ersten verschiedenen Polymer besteht, und wobei in der zweiten Teilschicht (6) zumindest ein Festschmierstoff enthalten ist, **dadurch gekennzeichnet, dass** der Anteil des Festschmierstoffes in der zweiten Teilschicht (6) in Richtung auf die erste Teilschicht (5) abnimmt.

6. Laufschicht (4) nach einem der Ansprüche 1 bis 5, **dadurch gekennzeichnet, dass** die erste Teilschicht (5) härter ist als die zweite Teilschicht (6).

7. Laufschicht (4) nach Anspruch 6, **dadurch gekennzeichnet, dass** die erste Teilschicht (5) eine Härte nach Vickers aufweist, die ausgewählt ist aus einem Bereich mit einer unteren Grenze von HV2 35 und einer oberen Grenze von HV2 60.

8. Laufschicht (4) nach Anspruch 6 oder 7, **dadurch gekennzeichnet, dass** die zweite Teilschicht (6) eine Härte nach Vickers aufweist, die ausgewählt ist aus einem Bereich mit einer unteren Grenze von HV2 25 und einer oberen Grenze von HV2 45.

9. Laufschicht (4) nach einem der Ansprüche 1 oder 6 bis 8, **dadurch gekennzeichnet, dass** in der ersten Teilschicht (5) zumindest ein Hartstoff enthalten ist.

10. Laufschicht (4) nach Anspruch 9, **dadurch gekennzeichnet, dass** der Anteil des zumindest einen Hartstoffes in der ersten Teilschicht (5) ausgewählt ist aus einem Bereich mit einer unteren Grenze von 5 Gew.-% und einer oberen Grenze von 50 Gew.-%.

11. Laufschicht (4) nach einem der Ansprüche 1 oder 6 bis 10, **dadurch gekennzeichnet, dass** in der zweiten Teilschicht (6) ein Hartstoff mit einem Anteil enthalten ist, der ausgewählt ist aus einem Bereich mit einer unteren Grenze von 2 Gew.-% und einer oberen Grenze von 50 Gew.-%.

12. Laufschicht (4) nach einem der Ansprüche 2, 4 oder 6 bis 11, **dadurch gekennzeichnet, dass** der Hartstoff ausgewählt ist aus einer Gruppe umfassend CrO₃, Fe₃O₄, PbO, ZnO, CdO, Al₂O₃, SiC, Si₃N₄, SiO₂, MnO, Si₃N₄, Ton, Talk, TiO₂, Aluminiumsilikate, wie z.B. Mullit, Magnesiumsilikate, wie z.B. Amosit, Antophyllit, Chrysotil, spheroidaler Kohlenstoff, Carbide, wie z.B. CaC₂, Mo₂C, WC, Metallpartikel, wie z.B. Zn, Ag, Ba, Bi, Bronze, Cd, Co, Cu, In, Pb, Sn, Tl, Blei-Zinn-Legierungspartikel, Lagermetallpartikel auf Pb- oder Sn-Basis, AlN, Fe₃P, Metallboride, wie z.B. Fe₂B, Ni₂B, FeB, BaSO₄, Metallsulfide, wie z.B. ZnS, Ag₂S, CuS, FeS, FeS₂, Sb₂S₃, PbS, Bi₂S₃, CdS, WS₂, chlorinierte Hydrogencarbonate, Fluoride, wie z.B. CF₂, Metallfluoride, wie z.B. PbF₂, Metalloxifluoride, Crocidolit, Tremolit, Molybdänthiocarbamate, Silizide, Thiophosphate, wie z.B. Zinkthiophosphat, sowie Mischungen daraus.

13. Laufschicht (4) nach einem der Ansprüche 1 bis 12, **dadurch gekennzeichnet, dass** der zumindest eine Festschmierstoff ausgewählt ist aus einer Gruppe umfassend MoS₂, h-BN, WS₂, Graphit, Polytetrafluorethylen, Pb, Pb-Sn-Legierungen, CF₂, PbF₂, sowie Mischungen daraus.

14. Laufschicht (4) nach einem der Ansprüche 1 oder 9 bis 13, **dadurch gekennzeichnet, dass** der Anteil des Hartstoffes in der ersten Teilschicht (5) in Richtung auf die zweite Teilschicht (6) abnimmt.

15. Laufschicht (4) nach einem der Ansprüche 1 oder 6 bis 14, **dadurch gekennzeichnet, dass** der Anteil des Festschmierstoffes in der ersten Teilschicht (5) in Richtung auf die zweite Teilschicht (6) zunimmt.

16. Laufschicht (4) nach einem der Ansprüche 11 bis 15, **dadurch gekennzeichnet, dass** der Anteil des Hartstoffes in der zweiten Teilschicht (6) in Richtung auf die erste Teilschicht (5) zunimmt.

17. Laufschicht (4) nach einem der Ansprüche 1 oder 6 bis 16, **dadurch gekennzeichnet, dass** der Anteil des Festschmierstoffes in der zweiten Teilschicht (6) in Richtung auf die erste Teilschicht (5) abnimmt.

18. Lagerelement (1), insbesondere Gleitlager, mit einer Stützmetallschicht (2), einer darüber angeordneten Lagermetallschicht (3) sowie einer über dieser angeordneten Laufschicht (4)**, dadurch gekennzeichnet, dass** die Laufschicht (4) nach einem der vorhergehenden Ansprüche gebildet ist, wobei die erste Teilschicht (5) zwischen der zweiten Teilschicht (6) und der Lagermetallschicht (3) angeordnet ist.

## Claims

1. Anti-friction layer (4) for a bearing element (1), in particular a plain bearing, comprising a synthetic polymer layer, in particular a resin or lacquer layer, and the polymer layer comprises a first part-layer (5) and a second part-layer (6), and the first part-layer (5) is made from a first polymer and the second part-layer (6) used as a surface in contact with a component to be mounted is made from a second polymer different from the first one, and the second part-layer (6) contains a proportion of at least one solid lubricant selected from a range with a lower limit of 15 % by weight and an upper limit of 50 % by weight, **characterised in that** the first part-layer (5) likewise contains a proportion of at least one solid lubricant selected from a range with a lower limit of 5 % by weight and an upper limit of 20 % by weight, provided the proportion of the at least one solid lubricant in the second part-layer (6) is greater than that of the first part layer (5).

2. Anti-friction layer (4) for a bearing element (1), in particular a plain bearing, comprising a synthetic polymer layer, in particular a resin or lacquer layer, and the polymer layer comprises a first part-layer (5) and a second part layer (6), and the first part layer (5) is made from a first polymer and the second part-layer (6) used as a surface in contact with a component to be mounted is made from a second polymer different from the first one, **characterised in that** the first part-layer (5) contains at least one hard material and the proportion of hard material in the first layer (5) decreases in the direction towards the second part-layer (6).

3. Anti-friction layer (4) for a bearing element (1), in particular a plain bearing, comprising a synthetic polymer layer, in particular a resin or lacquer layer, and the polymer layer comprises a first part-layer (5) and a second part-layer (6), and the first part-layer (5) is made from a first polymer and the second part-layer (6) used a surface in contact with a component to be mounted is made from a second polymer different from the first one, **characterised in that** the first part-layer (5)contains at least one solid lubricant and the proportion of solid lubricant in the first part-layer (5) increases in the direction towards the second part-layer (6).

4. Anti-friction layer (4) for a bearing element (1), in particular a plain bearing, comprising a synthetic polymer layer, in particular a resin or lacquer layer, and the polymer layer comprises a first part-layer (5) and a second part-layer (6), and the first part-layer (5) is made from a first polymer and the second part-layer (6) used a surface in contact with a component to be mounted is made from a second polymer different from the first one, **characterised in that** the second part-layer (6) contains a proportion of hard material selected from a range with a lower limit of 2 % by weight and an upper limit of 50 % by weight and the proportion of hard material in the second part-layer (6) increases in the direction towards the first part-layer (5).

5. Anti-friction layer (4) for a bearing element (1), in particular a plain bearing, comprising a synthetic polymer layer, in particular a resin or lacquer layer, and the polymer layer comprises a first part-layer (5) and a second part-layer (6), and the first part-layer (5) is made from a first polymer and the second part-layer (6) used a surface in contact with a component to be mounted is made from a second polymer different from the first one, and the second part-layer (6) contains at least one solid lubricant, **characterised in that** the proportion of solid lubricant in the second part-layer (6) decreases in the direction towards the first part-layer (5).

6. Anti-friction layer (4) as claimed in one of claims 1 to 5, **characterised in that** the first part-layer (5) is harder than the second part-layer (6).

7. Anti-friction layer (4) as claimed in claim 6, **characterised in that** the first part-layer (5) has a Vickers hardness selected from a range with a lower limit of HV2 35 and an upper limit of HV2 60.

8. Anti-friction layer (4) as claimed in claim 6 or 7, **characterised in that** the second part-layer (6) has a Vickers hardness selected from a range with a lower limit of HV2 25 and an upper limit of HV2 45.

9. Anti-friction layer (4) as claimed in one of claims 1 or 6 to 8, **characterised in that** the first part-layer (5) contains at least one hard material.

10. Anti-friction layer (4) as claimed in claim 9, **characterised in that** the proportion of the at least one hard material in the first part-layer (5) is selected from a range with a lower limit of 5 % by weight and an upper limit of 50 % by weight.

11. Anti-friction layer (4) as claimed in one of claims 1 or 6 to 10, **characterised in that** the second part-layer (6) contains a hard material in a proportion selected from a range with a lower limit of 2 % by weight and an upper limit of 50 % by weight.

12. Anti-friction layer (4) as claimed in one of claims 2, 4 or 6 to 11, **characterised in that** the hard material is selected from a group comprising CrO₃, Fe₃O₄, PbO, ZnO, CdO, Al₂O₃, SiC, Si₃N₄, SiO₂, MnO, Si₃N₄, clay, talc, TiO₂, aluminium silicates, such as for example mullite, magnesium silicates, such as for example amosite, antophyllite, chrysotile, spheroidal carbon, carbides, such as for example CaC₂, Mo₂C, WC, metal particles, such as for example Zn, Ag, Ba, Bi, bronze, Cd, Co, Cu, In, Pb, Sn, Tl, lead-tin alloy particles, bearing metal particles with a base of Pb or Sn, AIN, Fe₃P, metal borides, such as for example Fe₂B, Ni₂B, FeB, BaSO₄, metal sulphides, such as for example ZnS, Ag₂S, CuS, FeS, FeS₂, Sb₂S₃, PbS, Bi₂S₃, CdS, WS₂, chlorinated hydrogen carbonates, fluorides, such as for example CF₂, metal fluorides, such as for example PbF₂, metal oxy-fluorides, crocidolite, tremolite, molybdenum thio-carbamates, silicides, thio-phosphates, such as for example zinc thio-phosphate, as well as mixtures thereof.

13. Anti-friction layer (4) as claimed in one of claims 1 to 12, **characterised in that** the at least one solid lubricant is selected from a group comprising MoS₂, h-BN, WS₂, graphite, polytetrafluoroethylene, Pb, Pb-Sn-alloys, CF₂, PbF₂, as well as mixtures thereof.

14. Anti-friction layer (4) as claimed in one of claims 1 or 9 to 13, **characterised in that** the proportion of hard material in the first part-layer (5) decreases in the direction towards the second part-layer (6).

15. Anti-friction layer (4) as claimed in one of claims 1 or 6 to 14, **characterised in that** the proportion of solid lubricant in the first part-layer (5) increases in the direction towards the second part-layer (6).

16. Anti-friction layer (4) as claimed in one of claims 11 to 15, **characterised in that** the proportion of hard material in the second part-layer (6) increases in the direction towards the first part-layer (5).

17. Anti-friction layer (4) as claimed in one of claims 1 or 6 to 16, **characterised in that** the proportion of solid lubricant in the second part-layer (6) decreases in the direction towards the first part-layer (5).

18. Bearing element (1), in particular a plain bearing, with a supporting metal layer (2), a bearing metal layer (3) disposed on top of it and an anti-friction layer (4) disposed on top of the latter, **characterised in that** the anti-friction layer (4) is as claimed in one of the preceding claims, and the first part-layer (5) is disposed between the second part-layer (6) and the bearing metal layer (3).

## Revendications

1. Couche de roulement (4) pour un élément de palier (1), en particulier un palier de glissement, en une couche de polymère synthétique, en particulier une couche de résine ou de vernis, où la couche de polymère est constituée d'une première couche partielle (5) et d'une deuxième couche partielle (6), et la première couche partielle (5) est réalisée en un premier polymère, et la deuxième couche partielle (6), qui sert à l'application à un élément de construction à loger, en un deuxième polymère différent du premier, et où dans la deuxième couche partielle (6) se trouve au moins un lubrifiant solide en une part qui est sélectionnée dans une plage avec une limite inférieure de 15% en poids et une limite supérieure de 50% en poids, **caractérisée en ce que** la première couche partielle (5) contient également au moins un lubrifiant solide en une part qui est sélectionnée dans une plage avec une limite inférieure de 5% en poids et une limite supérieure de 20% en poids, à condition que la part du au moins un lubrifiant solide dans la deuxième couche partielle (6) soit plus grande que dans la première couche partielle (5).

2. Couche de roulement (4) pour un élément de palier (1), en particulier un palier à glissement, en une couche de polymère synthétique, en particulier une couche de résine ou de vernis, où la couche de polymère est constituée d'une première couche partielle (5) et d'une deuxième couche partielle (6), et la première couche partielle (5) est constituée d'un premier polymère, et la deuxième couche partielle (6), qui sert à l'application à un élément de construction à loger, en un deuxième polymère différent du premier, **caractérisée en ce que** la première couche partielle (5) contient au moins un matériau dur, où la part en matériau dur dans la première couche partielle (5) diminue en direction de la deuxième couche partielle (6).

3. Couche de roulement (4) pour un élément de palier (1), en particulier un palier à glissement, en une couche de polymère synthétique, en particulier une couche de résine ou de vernis, où la couche de polymère est constituée d'une première couche partielle (5) et d'une deuxième couche partielle (6), et la première couche partielle (5) est constituée d'un premier polymère, et la deuxième couche partielle (6), qui sert à l'application à un élément de construction à loger, est constituée d'un deuxième polymère différent du premier, **caractérisée en ce que** la première couche partielle (5) contient au moins un lubrifiant solide, où la part du lubrifiant solide dans la première couche partielle (5) augmente en direction de la deuxième couche partielle (6).

4. Couche de roulement (4) pour un élément de palier (1), en particulier un palier à glissement, en une couche de polymère synthétique, en particulier une couche de résine ou de vernis, où la couche de polymère est constituée d'une première couche partielle (5) et d'une deuxième couche partielle (6), et la première couche partielle (5) est constituée d'un premier polymère, et la deuxième couche partielle (6), qui sert à l'application à un élément de construction à loger, est constituée d'un deuxième polymère différent du premier, **caractérisée en ce que** la deuxième couche partielle (6) contient un matériau dur en une part qui est sélectionnée dans une plage ayant une limite inférieure de 2% en poids et une limite supérieure de 50%, et la part en matériau dur dans la deuxième couche partielle (6) augmente en direction de la première couche partielle (5).

5. Couche de roulement (4) pour un élément de palier (1), en particulier un palier à glissement, en une couche de polymère synthétique, en particulier une couche de résine ou de vernis, où la couche de polymère est constituée d'une première couche partielle (5) et d'une deuxième couche partielle (6), et la première couche partielle (5) est constituée d'un premier polymère, et la deuxième couche partielle (6), qui sert à l'application à un élément de construction à loger, est constituée d'un deuxième polymère différent du premier, et où la deuxième couche partielle (6) contient au moins un lubrifiant solide, **caractérisée en ce que** la part en lubrifiant solide dans la deuxième couche partielle (6) diminue en direction de la première couche partielle (5).

6. Couche de roulement (4) selon l'une des revendications 1 à 5, **caractérisée en ce que** la première couche partielle (5) est plus dure que la deuxième couche partielle (6).

7. Couche de roulement (4) selon la revendication 6, **caractérisée en ce que** la première couche partielle (5) présente une dureté selon Vickers, qui est sélectionnée dans une plage ayant une limite inférieure de HV2 35 et une limite supérieure de HV2 60.

8. Couche de roulement (4) selon la revendication 6 ou 7, **caractérisée en ce que** la deuxième couche partielle (6) présente une dureté selon Vickers, qui est sélectionnée dans une plage avec une limite inférieure de HV2 25 et une limite supérieure de HV2 45.

9. Couche de roulement (4) selon l'une des revendications 1 ou 6 à 8, **caractérisée en ce que** la première couche partielle (5) contient au moins un matériau dur.

10. Couche de roulement (4) selon la revendication 9, **caractérisée en ce que** la part d'au moins un matériau dur dans la première couche partielle (5) est sélectionnée d'une plage avec une limite inférieure de 5% en poids et une limite supérieure de 50% en poids.

11. Couche de roulement (4) selon l'une des revendications 1 ou 6 à 10, **caractérisée en ce que** la deuxième couche partielle (6) contient un matériau dur en une part qui est sélectionnée dans une zone avec une limite inférieure de 2% en poids et une limite supérieure de 50% en poids.

12. Couche de roulement (4) selon l'une des revendications 2, 4 ou 6 à 11, **caractérisée en ce que** le matériau dur est sélectionné d'un groupe comprenant CrO₃, Fe₃O₄, PbO, ZnO, CdO, Al₂O₃, SiC, Si₃N₄, SiO₂, MnO, Si₃N₄, argile, talc, TiO₂, des silicates d'aluminium, comme par exemple mullite, des silicates de magnésium, comme par exemple amosit, antophyllite, chrysotil, carbone spheroidal, carbures, comme par exemple CaC₂, Mo2C, WC, des particules métalliques comme par exemple Zn, Ag, Ba, Bi, bronze, Cd, Co, Cu, In, Pb, Sn, TI, des particules d'alliage plomb-étain, des particules de métal de palier à base de Pb ou Sn, AIN, Fe₃P, des borures métalliques comme par exemple Fe₂B, Ni₂B, FeB, BaSO₄, des sulfures métalliques, comme par exemple ZnS, Ag₂S, CuS, FeS, FeS₂, Sb₂S₃, PbS, Bi₂S₃, CdS, WS₂, des carbonates d'hydrogène chlorés, des fluorures, comme par exemple CF₂, des fluorures métalliques, comme par exemple PbF₂, des oxyfluorures métalliques, crocidolite, trémolite, thiocarbamates de molybdène, siliciures, thiophosphates, comme par exemple le thiophosphate de zinc, et leurs mélanges.

13. Couche de roulement (4) selon l'une des revendications 1 à 12, **caractérisée en ce qu'**au moins un lubrifiant solide précité est sélectionné dans un groupe comprenant MoS₂, h-BN, WS₂, graphite polytétrafluoroéthylène, Pb, alliages Pb-SN, CF₂, PbF₂, ainsi que leurs mélanges.

14. Couche de roulement (4) selon l'une des revendications 1 ou 9 à 13, **caractérisée en ce que** la part en matériau dur dans la première couche partielle (5) diminue en direction de la deuxième couche partielle (6).

15. Couche de roulement (4) selon l'une des revendications 1 ou 6 à 14, **caractérisée en ce que** la part en lubrifiant solide dans la première couche partielle (5) augmente en direction de la deuxième couche partielle (6).

16. Couche de roulement (4) selon l'une des revendications 11 à 15, **caractérisée en ce que** la part en matériau dur dans la deuxième couche partielle (6) augmente en direction de la première couche partielle (5).

17. Couche de roulement (4) selon l'une des revendications 1 ou 6 à 16, **caractérisée en ce que** la part en lubrifiant solide dans la deuxième couche partielle (6) diminue en direction de la première couche partielle (5).

18. Elément de palier (1), en particulier palier à glissement, avec une couche métallique de support (2), une couche métallique de palier (3) disposée sur celle-ci ainsi qu'une couche de roulement (4) disposée sur celle-ci, **caractérisé en ce que** la couche de roulement (4) est réalisée selon l'une des revendications précédentes, où la première couche partielle (5) est disposée entre la deuxième couche partielle (6) et la couche métallique de palier (3).
